(19) Europäisches Patentamt
European Patent Office
Office européen des brevets

(11) EP 4 279 544 A1

(12) EUROPEAN PATENT APPLICATION
published in accordance with Art. 153(4) EPC

(43) Date of publication:
**22.11.2023 Bulletin 2023/47**

(21) Application number: **22739348.5**

(22) Date of filing: **07.01.2022**

(51) International Patent Classification (IPC):
***C08L 23/00*** *(2006.01)* ***C08K 3/013*** *(2018.01)*
***C08K 3/04*** *(2006.01)* ***C08K 3/26*** *(2006.01)*
***C08K 3/34*** *(2006.01)* ***C08K 5/098*** *(2006.01)*
***C08L 23/10*** *(2006.01)*

(52) Cooperative Patent Classification (CPC):
**C08K 3/013; C08K 3/04; C08K 3/26; C08K 3/34; C08K 5/098; C08L 23/00; C08L 23/10**

(86) International application number:
**PCT/JP2022/000344**

(87) International publication number:
**WO 2022/153939 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.01.2021 JP 2021003496**

(71) Applicant: **SUMITOMO CHEMICAL COMPANY, LIMITED**
**Tokyo 103-6020 (JP)**

(72) Inventors:
- **HIGUCHI, Yu**
**Ichihara-shi, Chiba 299-0195 (JP)**
- **URANO, Wakaba**
**Ichihara-shi, Chiba 299-0195 (JP)**

(74) Representative: **Global IP Europe Patentanwaltskanzlei**
**Pfarrstraße 14**
**80538 München (DE)**

# (54) OLEFIN RESIN COMPOSITION AND MOLDED BODY CONTAINING SAME

(57) Provided is an olefin resin composition that has low fogging properties and that emit less odor when exposed to high temperatures. The olefin resin composition contains an olefin polymer, an inorganic filler, and 0.001 to 3 mass% of at least one selected from the group consisting of compounds represented by formula (1) below and basic zinc carbonate.

$$M(OH)_q(R^1\text{-}CO_2)_r \qquad (1)$$

(in formula (1), M represents a zinc atom or an aluminum atom; q represents 0, 1, 2 or 3; r represents 0, 1, 2 or 3; when M is a zinc atom, q + r is 2, or when M is an aluminum atom, q + r is 3; when q is 0, $R^1$ represents a $C_{10}$-$C_{25}$ monovalent linear aliphatic hydrocarbon group substituted by a hydroxy group; and when q is 1, 2 or 3, $R^1$ represents a $C_{10}$-$C_{25}$ monovalent linear aliphatic hydrocarbon group optionally substituted by a hydroxy group.)

EP 4 279 544 A1

## Description

TECHNICAL FIELD

The present invention relates to an olefin resin composition and a molded body containing the olefin resin composition.

BACKGROUND ART

Exposure of resin compositions to high temperatures may cause evaporation of components of resin compositions. For example, molded products of resin compositions when exposed to high temperatures together with transparent members, such as glass plates, in a closed space may cause condensation of volatile components on the transparent members to make the transparent members foggy. This phenomenon is called fogging.

Since fogging reduces transparency of transparent members, the resin compositions preferably cause no or less fogging, that is, low fogging properties.

Patent Document 1 discloses a technique for adding an adsorbent, such as calcium hydroxide, to a resin composition to obtain low fogging properties.

PRIOR ART DOCUMENTS

PATENT DOCUMENT

Patent Document 1: JP-A-2013-100444

SUMMARY OF THE INVENTION

PROBLEMS TO BE SOLVED BY THE INVENTION

Olefin resin compositions containing olefin polymers may be used in a wide range of applications due to their good mechanical properties. For example, olefin resin compositions may be suitably used as materials for forming automotive interior parts. Since automotive cabins can be closed spaces in which the temperature reaches as high as 50°C to 60°C and also have transparent members such as windshields, olefin resin compositions that may be used in automotive cabins preferably have low fogging properties. As used herein, the term low fogging properties refer to properties that cause no or less fogging.

Odor emission in automotive cabins may cause discomfort to drivers and passengers or other persons. Thus, olefin resin compositions preferably emit less odor when exposed to high temperatures.

There is therefore a need of an olefin resin composition that has low fogging properties and emits less odor when exposed to high temperatures, and a molded body containing the olefin resin composition.

MEANS FOR SOLVING THE PROBLEMS

The present invention provides the following embodiments.

[1] An olefin resin composition containing:

an olefin polymer;
an inorganic filler; and
0.001 to 3 mass% of at least one selected from the group consisting of compounds represented by formula (1) and basic zinc carbonate:

$$M(OH)_q(R^1\text{-}CO_2)_r \qquad (1)$$

(in formula (1),

M represents a zinc atom or an aluminum atom;
q represents 0, 1, 2 or 3; r represents 0, 1, 2 or 3; when M is a zinc atom, q + r is 2, or when M is an aluminum atom, q + r is 3;
when q is 0, $R^1$ represents a $C_{10}$-$C_{25}$ monovalent linear aliphatic hydrocarbon group substituted by a hydroxy

group; and
when q is 1, 2 or 3, $R^1$ represents a $C_{10}$-$C_{25}$ monovalent linear aliphatic hydrocarbon group optionally substituted by a hydroxy group).

[2] The olefin resin composition according to [1], wherein the olefin polymer is a propylene-based polymer.
[3] The olefin resin composition according to [1], wherein the olefin polymer is an ethylene-based polymer.
[4] The olefin resin composition according to any one of [1] to [3], wherein the inorganic filler contains talc.
[5] The olefin resin composition according to any one of [1] to [4], further containing 0.001 to 3 mass% of a pigment relative to the olefin resin composition.
[6] The olefin resin composition according to [5], wherein the pigment contains carbon black.
[7] The olefin resin composition according to any one of [1] to [7], wherein in the compounds represented by formula (1), M is a zinc atom, q is 0, and $R^1$ is a $C_{10}$-$C_{25}$ linear alkenyl group substituted by a hydroxy group.
[8] The olefin resin composition according to any one of [1] to [7], wherein the olefin resin composition contains basic zinc carbonate.
[9] The olefin resin composition according to any one of claims 1 to 8, further containing zinc bis(stearate).
[10] A molded body containing the olefin resin composition according to any one of [1] to [9].
[11] A method for producing the molded body according to [10], the method including step (A') and step (B'):

Step (A'): a step of pulverizing a molded body containing the olefin resin composition according to any one of [1] to [9] to form a pulverized material,
Step (B'): a step of molding the pulverized material into a molded body containing the olefin resin composition according to any one of [1] to [9].

## EFFECT OF THE INVENTION

The present invention can provide an olefin resin composition that has low fogging properties and emits less odor when exposed to high temperatures, and a molded body containing the olefin resin composition.

## MODE FOR CARRYING OUT THE INVENTION

Hereinafter, embodiments and examples of the present invention will be described in detail. The present invention is not limited to the embodiments and examples described below and may be freely modified and practiced without departing from the claims of the present invention and the scope of their equivalents.
In this description, "AA to BB" refers to AA or more and BB or less. AA and BB represent values satisfying AA < BB. The unit of AA is the same as the unit just after BB, unless otherwise specified.
In this description, the term "monomer unit" refers to a constitutional unit having a structure formed by polymerizing the monomer.
In this description, the term "a-olefin" refers to an olefin having a carbon-carbon double bond at its terminal.
In this description, the limiting viscosity number (unit: dL/g) is a value measured at a temperature of 135°C by the following method using tetralin as a solvent.
The limiting viscosity number is determined by an "extrapolation method", in which the reduced viscosity is measured at different concentrations by using an Ubbelohde viscometer, and the reduced viscosity is plotted against concentration and extrapolated to zero. More specifically, the limiting viscosity number is determined by measuring the reduced viscosity at three concentrations, 0.1 g/dL, 0.2 g/dL, and 0.5 g/dL, plotting the reduced viscosity against concentration, and extrapolating the reduced viscosity to zero concentration in accordance with the method described in "Polymer Solution, Polymer Experiment 11" (published by Kyoritsu Shuppan Co., Ltd., 1982), page 491.

[1. Overview of Olefin Resin Composition]

An olefin resin composition according to an embodiment of the present invention contains an olefin polymer, an inorganic filler, and 0.001 to 3 mass% of at least one selected from the group consisting of compounds represented by the formula (1) and basic zinc carbonate. Hereinafter, the at least one selected from the group consisting of compounds represented by formula (1) and basic zinc carbonate is also referred to as a component (Z) .
The olefin resin composition according to this embodiment has low fogging properties and emits less odor when exposed to high temperatures.
Components that may be contained in the olefin resin composition will be described below.

[2. Olefin Polymer]

An olefin polymer includes a constitutional unit (olefin unit) having a structure formed by polymerizing an olefin. The olefin resin composition may contain a single olefin polymer or may include two or more olefin polymers in combination at any ratio.

The olefin polymer may be a polymer including only one olefin unit or may be a copolymer including two or more olefin units.

The olefin polymer may include a constitutional unit other than the olefin unit. The content of the olefin unit that may be contained in the olefin polymer relative to the total mass (100 mass%) of all constitutional units included in the olefin polymer is preferably 80 mass% or more, more preferably 90 mass% or more, still more preferably 95 mass% or more, and normally 100 mass% or less, and may be 100 mass%.

The olefin that may constitute the olefin polymer may be a linear olefin or a branched olefin. The olefin may be an olefin having a cyclic structure, and may be an α-olefin having a cyclic structure, such as vinylcyclopropane or vinylcyclobutane.

Specific examples of the olefin that may constitute the olefin polymer include α-olefins (e.g. ethylene, propylene, 1-butene, 1-pentene, 1-hexene, 4-methyl-1-pentene, 1-octene, and 1-decene).

The olefin that may constitute the olefin polymer is preferably an α-olefin, more preferably ethylene, propylene, 1-butene, 1-pentene, 1-hexene, 4-methyl-1-pentene, 1-octene, and 1-decene, more preferably ethylene, propylene, 1-butene, 1-hexene, and 1-octene.

The content of the olefin polymer in the olefin resin composition of this embodiment relative to the total mass (100 mass%) of the olefin resin composition is preferably 30 mass% or more, more preferably 35 mass% or more, still more preferably 40 mass% or more, and preferably 99 mass% or less, more preferably 97 mass% or less, still more preferably 95 mass% or less, preferably 30 to 95 mass%.

The olefin polymer may be produced by a commonly known method using an olefin as a raw material.

In one embodiment, the olefin polymer is preferably an ethylene-based polymer including an ethylene unit. The ethylene-based polymer includes more than 50 mass% of the ethylene unit relative to the total mass of the constitutional units of the polymer. The ethylene unit in the ethylene-based polymer is normally 100 mass% or less. Examples of the ethylene-based polymer include an ethylene homopolymer (polyethylene) and copolymers of ethylene and other monomers polymerizable with ethylene. The ethylene-based polymer is preferably an ethylene homopolymer. The copolymers may be random copolymers or block copolymers. In one embodiment, the ethylene-based polymer preferably includes no propylene unit.

In another embodiment, the olefin polymer is preferably a propylene-based polymer including a propylene unit. Hereinafter, a resin composition containing a propylene-based polymer is also referred to as a propylene-based resin composition.

The propylene-based polymer includes more than 50 mass% of the propylene unit relative to the total mass of the constitutional units of the polymer. The propylene unit in the propylene-based polymer is normally 100 mass% or less.

Examples of the propylene-based polymer include a propylene homopolymer; and copolymers of propylene and other monomers polymerizable with propylene. The copolymers may be random copolymers or block copolymers.

The propylene-based resin composition may contain a single propylene-based polymer or may include two or more propylene-based polymers in combination at any ratio.

Examples of single propylene-based polymers include a propylene homopolymer; and random copolymers of propylene and other monomers copolymerizable with propylene (hereinafter also referred to as propylene-based random copolymers).

Examples of combinations of two or more propylene-based polymers include a combination of two or more propylene homopolymers having different weight average molecular weights or other properties; and a combination of a polymer (I) and a polymer (II) described below.

The propylene-based resin composition may contain a heterophasic propylene polymer material as a propylene-based polymer. The heterophasic propylene polymer material refers to a material that contains two or more propylene-based polymers and in which the two or more propylene-based polymers are incompatible with each other to form different phases.

Examples of the heterophasic propylene polymer material include a combination of the polymer (I) and the polymer (II) described below.

The polymer (I) is a polymer having more than 80 mass% and 100 mass% or less of the propylene unit relative to the total mass of the constitutional units.

The polymer (II) is a copolymer of a propylene unit and at least one monomer unit selected from the group consisting of an ethylene unit and α-olefin units having 4 or more carbon atoms. The polymer (II) is preferably a polymer having more than 0 mass% and 90 mass% or less of a propylene unit relative to the total mass of the constitutional units, more preferably a polymer having more than 0 mass% and 80 mass% or less of the propylene unit.

The polymer (I) may be a propylene homopolymer or a copolymer of propylene and another monomer. The polymer (I) and the polymer (II) may each be a single polymer or a combination of two or more polymers.

To improve the rigidity and impact resistance of a molded body containing the resin composition, the propylene-based polymer is preferably at least one selected from the group consisting of a propylene homopolymer and heterophasic propylene polymer materials.

To improve the rigidity of a molded body containing the resin composition, the isotactic pentad fraction (also referred to as an "mmmm" fraction) of the propylene-based polymer as measured by $^{13}C$-NMR is preferably 0.97 or more, more preferably 0.98 or more. As the isotactic pentad fraction of the propylene-based polymer approaches 1, the molecular structure of the propylene-based polymer has higher stereoregularity, and the propylene-based polymer has higher crystallinity. When the propylene-based polymer is a copolymer, the isotactic pentad fraction of a chain of propylene units in the copolymer may be measured.

To improve the moldability of the resin composition, the melt flow rate (MFR) of the propylene-based polymer measured at 230°C under a load of 2.16 kgf in accordance with JIS K7210-1:2014 and K7210-2:2014 is preferably 0.1 g/10 min or more, more preferably 0.5 g/10 min or more, still more preferably 1 g/10 min or more, particularly preferably 3 g/10 min or more, preferably 500 g/10 min or less, more preferably 300 g/10 min or less, particularly preferably 3 g/10 min to 300 g/10 min.

The propylene-based polymer can be produced by, for example, the polymerization method described below using a polymerization catalyst.

Examples of the polymerization catalyst include Ziegler catalyst systems; Ziegler-Natta catalyst systems; a catalyst system containing an alkylaluminoxane and a Group 4 transition metal compound having a cyclopentadienyl ring; a catalyst system containing a Group 4 transition metal compound having a cyclopentadienyl ring, a compound that reacts with the Group 4 transition metal compound to form an ionic complex, and an organoaluminum compound; and a catalyst system produced by modifying inorganic particles (e.g., silica, clay minerals) with a catalyst component (e.g., a Group 4 transition metal compound having a cyclopentadienyl ring, a compound that forms an ionic complex, an organoaluminum compound) such that the catalyst component is supported on the inorganic particles. A prepolymerized catalyst prepared by prepolymerizing a monomer, such as ethylene or an $\alpha$-olefin, in the presence of the catalyst system described above may be used. Examples of Ziegler-Natta catalyst systems include a catalyst system including a titanium-containing solid transition metal component and an organometallic component in combination.

Examples of the above catalyst systems include catalyst systems described in JP-A-61-218606, JP-A-5-194685, JP-A-7-216017, JP-A-9-316147, JP-A-10-212319, and JP-A-2004-182981.

Examples of the polymerization method include bulk polymerization, solution polymerization, and gas phase polymerization. Bulk polymerization refers to polymerization using, as a medium, an olefin in the form of liquid at a polymerization temperature. Solution polymerization refers to polymerization in an inert hydrocarbon solvent, such as propane, butane, isobutane, pentane, hexane, heptane, or octane. Gas phase polymerization refers to polymerization of a gaseous monomer in a medium of the gaseous monomer.

Examples of the type of polymerization include batch polymerization, continuous polymerization, and a combination thereof. The type of polymerization may be multi-stage polymerization using two or more polymerization reactors connected in series.

Various conditions (e.g., polymerization temperature, polymerization pressure, monomer concentration, catalyst loading amount, polymerization time) in the polymerization process can be appropriately determined depending on the intended propylene-based polymer.

To remove the residual solvent contained in the produced propylene-based polymer, ultra-low molecular weight oligomers generated as by-products during production, and other substances, the produced propylene-based polymer may be kept at a temperature at which impurities such as the residual solvent and the oligomers may volatilize and that is lower than the melting point of the propylene-based polymer in the process for producing the propylene-based polymer. Examples of the method for removing impurities such as the residual solvent and the oligomers include methods described in JP-A-55-75410 and JP-B2-2565753.

(Propylene Homopolymer)

To improve the fluidity of the molten resin composition and the toughness of a molded body containing the resin composition, the limiting viscosity number [$\eta$] of the propylene homopolymer is preferably 0.1 to 5 dL/g, more preferably 0.5 to 5 dL/g, still more preferably 0.7 to 4 dL/g. The limiting viscosity number [$\eta$] is a value measured in tetralin at 135°C.

To improve the fluidity of the molten resin composition and the toughness of a molded body containing the resin composition, the molecular weight distribution Mw/Mn of the propylene homopolymer is preferably 2 or more and less than 10, more preferably 3 to 8, still more preferably 3 to 7. Mw represents a weight average molecular weight, and Mn represents a number average molecular weight. The molecular weight distribution is a value measured by gel

permeation chromatography (GPC).

(Propylene-Based Random Copolymer)

Examples of the propylene-based random copolymers include a random copolymer including a propylene unit and an ethylene unit (hereinafter also referred to as a random polymer (1)); a random copolymer including a propylene unit and an α-olefin unit having 4 or more carbon atoms (hereinafter also referred to as a random polymer (2)); and a random copolymer including a propylene unit, an ethylene unit, and an α-olefin unit having 4 or more carbon atoms (hereinafter also referred to as a random polymer (3)).

The α-olefin having 4 or more carbon atoms that may constitute the propylene-based random copolymers is preferably an α-olefin having 4 to 10 carbon atoms. Examples of the α-olefin having 4 to 10 carbon atoms include 1-butene, 1-pentene, 1-hexene, 4-methyl-1-pentene, 1-octene, and 1-decene. Preferred are 1-butene, 1-hexene, and 1-octene.

Examples of the random copolymer (2) include a propylene-1-butene random copolymer, a propylene-1-hexene random copolymer, a propylene-1-octene random copolymer, and a propylene-1-decene random copolymer.

Examples of the random copolymer (3) include a propylene-ethylene-1-butene copolymer, a propylene-ethylene-1-hexene copolymer, a propylene-ethylene-1-octene copolymer, and a propylene-ethylene-1-decene copolymer.

The content of the ethylene unit in the random copolymer (1) is preferably 0.1 to 60 mass%, more preferably 10 to 50 mass%.

The content of the α-olefin unit having 4 or more carbon atoms in the random copolymer (2) is preferably 0.1 to 80 mass%, more preferably 1 to 75 mass%, still more preferably 5 to 72 mass%.

The total content of the ethylene unit and the α-olefin unit having 4 or more carbon atoms in the random copolymer (3) is preferably 0.1 to 80 mass%, more preferably 1 to 75 mass%, still more preferably 5 to 50 mass%.

The content of the propylene unit in each of the random copolymers (1) to (3) is preferably 20 to 99.9 mass%.

(Heterophasic Propylene Polymer Material)

The polymer (I) is a polymer having more than 80 mass% and 100 mass% or less of the propylene unit relative to the total mass of the constitutional units, as described above. The total content of the monomer units other than the propylene unit in the polymer (I) is normally 0 mass% or more and less than 20 mass%, and may be 0 mass%, or 0.01 mass% or more relative to the mass (100 mass%) of the polymer (I).

Examples of the monomer units that the polymer (I) may have other than the propylene unit include an ethylene unit and α-olefin units having 4 or more carbon atoms.

The α-olefin having 4 or more carbon atoms that may constitute the polymer (I) is preferably an α-olefin having 4 to 10 carbon atoms, more preferably 1-butene, 1-hexene, or 1-octene, still more preferably 1-butene.

Examples of the polymer (I) include propylene homopolymer, propylene-ethylene copolymer, propylene-1-butene copolymer, propylene-1-hexene copolymer, propylene-1-octene copolymer, propylene-ethylene-1-butene copolymer, propylene-ethylene-1-hexene copolymer, and propylene-ethylene-1-octene copolymer.

Of these polymers, the polymer (I) is preferably propylene homopolymer, propylene-ethylene copolymer, propylene-1-butene copolymer, or propylene-ethylene-1-butene copolymer. To improve the rigidity of a molded body containing the resin composition, the polymer (I) is particularly preferably propylene homopolymer.

The polymer (II) is a copolymer of a propylene unit and at least one monomer unit selected from the group consisting of an ethylene unit and α-olefin units having 4 or more carbon atoms, as described above.

The total content of the ethylene unit and the α-olefin units having 4 or more carbon atoms in the polymer (II) is preferably 20 to 80 mass%, more preferably 20 to 60 mass% relative to the mass (100 mass%) of the polymer (II).

Suitable examples of the α-olefin having 4 or more carbon atoms that may constitute the polymer (II) include α-olefins having 4 to 10 carbon atoms, which are the same as examples of the α-olefins that may constitute the polymer (I).

Examples of the polymer (II) include propylene-ethylene copolymer, propylene-ethylene-1-butene copolymer, propylene-ethylene-1-hexene copolymer, propylene-ethylene-1-octene copolymer, propylene-ethylene-1-decene copolymer, propylene-1-butene copolymer, propylene-1-hexene copolymer, propylene-1-octene copolymer, and propylene-1-decene copolymer. The polymer (II) is preferably propylene-ethylene copolymer, propylene-1-butene copolymer, or propylene-ethylene-1-butene copolymer, more preferably propylene-ethylene copolymer.

The content of the polymer (II) in the heterophasic propylene polymer material relative to the total mass (100 mass%) of the polymer (I) and the polymer (II) is preferably 1 to 50 mass%, more preferably 1 to 45 mass%, still more preferably 5 to 40 mass%, particularly preferably 8 to 32 mass%.

Examples of the heterophasic propylene polymer material include the following combinations of polymers in which the polymer (I) is propylene homopolymer.

Examples of combinations include a combination of propylene homopolymer and (propylene-ethylene) copolymer; a combination of propylene homopolymer and (propylene-ethylene-1-butene) copolymer; a combination of propylene homopolymer and (propylene-ethylene-1-hexene) copolymer; a combination of propylene homopolymer and (propylene-ethylene-1-octene) copolymer; a combination of propylene homopolymer and (propylene-1-butene) copolymer; a combination of propylene homopolymer and (propylene-1-hexene) copolymer; a combination of propylene homopolymer and (propylene-1-octene) copolymer; and a combination of propylene homopolymer and (propylene-1-decene) copolymer.

Other examples of the heterophasic propylene polymer material include the following combinations of polymers in which the polymer (I) is a polymer including a propylene unit and a monomer unit other than the propylene unit. In the combinations, the polymer (I) is followed by the polymer (II).

Examples of combinations include a combination of (propylene-ethylene) copolymer and (propylene-ethylene) copolymer; a combination of (propylene-ethylene) copolymer and (propylene-ethylene-1-butene) copolymer; a combination of (propylene-ethylene) copolymer and (propylene-ethylene-1-hexene) copolymer; a combination of (propylene-ethylene) copolymer and (propylene-ethylene-1-octene) copolymer; a combination of (propylene-ethylene) copolymer and (propylene-ethylene-1-decene) copolymer; a combination of (propylene-ethylene) copolymer and (propylene-1-butene) copolymer; a combination of (propylene-ethylene) copolymer and (propylene-1-hexene) copolymer; a combination of (propylene-ethylene) copolymer and (propylene-1-octene) copolymer; a combination of (propylene-ethylene) copolymer and (propylene-1-decene) copolymer; a combination of (propylene-1-butene) copolymer and (propylene-ethylene) copolymer; a combination of (propylene-1-butene) copolymer and (propylene-ethylene-1-butene) copolymer; a combination of (propylene-1-butene) copolymer and (propylene-ethylene-1-hexene) copolymer; a combination of (propylene-1-butene) copolymer and (propylene-ethylene-1-octene) copolymer; a combination of (propylene-1-butene) copolymer and (propylene-ethylene-1-decene) copolymer; a combination of (propylene-1-butene) copolymer and (propylene-1-butene) copolymer; a combination of (propylene-1-butene) copolymer and (propylene-1-hexene) copolymer; a combination of (propylene-1-butene) copolymer and (propylene-1-octene) copolymer; a combination of (propylene-1-butene) copolymer and (propylene-1-decene) copolymer; a combination of (propylene-1-hexene) copolymer and (propylene-1-hexene) copolymer; a combination of (propylene-1-hexene) copolymer and (propylene-1-octene) copolymer; a combination of (propylene-1-hexene) copolymer and (propylene-1-decene) copolymer; a combination of (propylene-1-octene) copolymer and (propylene-1-octene) copolymer; and a combination of (propylene-1-octene) copolymer and (propylene-1-decene) copolymer.

The heterophasic propylene polymer material that may be contained in the resin composition of this embodiment is preferably a combination of propylene homopolymer and (propylene-ethylene) copolymer, a combination of propylene homopolymer and (propylene-ethylene-1-butene) copolymer, a combination of (propylene-ethylene) copolymer and (propylene-ethylene) copolymer, a combination of (propylene-ethylene) copolymer and (propylene-ethylene-1-butene) copolymer, or a combination of (propylene-1-butene) copolymer and (propylene-1-butene) copolymer, more preferably a combination of propylene homopolymer and (propylene-ethylene) copolymer.

The heterophasic propylene polymer material can be produced by multi-step polymerization including the upstream polymerization step of preparing the polymer (I) and the polymerization step of preparing the polymer (II) in the presence of the polymer (I) prepared in the upstream polymerization step. The polymerization can be performed by using a catalyst system illustrated as a catalyst that can be used to produce the propylene-based polymer.

The limiting viscosity number of the polymer (I) (hereinafter referred to as $[\eta]I$) is preferably 0.1 to 5 dL/g, more preferably 0.5 to 5 dL/g, still more preferably 0.7 to 4 dL/g. The limiting viscosity number $[\eta]I$ is a value measured in tetralin at 135°C.

The limiting viscosity number of the polymer (II) (hereinafter referred to as $[\eta]II$) is preferably 1 to 10 dL/g, more preferably 2 to 10 dL/g, still more preferably 2.5 to 8 dL/g.

The ratio ($[\eta]II/[\eta]I$) of $[\eta]II$ to $[\eta]I$ is preferably 0.5 to 20, more preferably 0.8 to 10, still more preferably 0.9 to 9.

When the propylene-based polymer is a polymer material composed of the polymer (I) and the polymer (II) formed by multi-step polymerization, the limiting viscosity number of the polymer formed in the upstream polymerization is determined from part of the polymer taken out of the polymerization tank for the upstream polymerization, and the limiting viscosity number (hereinafter referred to as $[\eta]Total$) of the polymer material finally formed in multi-step polymerization is determined. The limiting viscosity number of the polymer formed in the downstream polymerization is calculated by using these limiting viscosity numbers and the content of each polymer.

When the polymer material composed of the polymer (I) and the polymer (II) is a material including the polymer (I) prepared in the upstream polymerization step and the polymer (II) prepared in the downstream polymerization step, the content of each of the polymer (I) and the polymer (II) and the limiting viscosity numbers ($[\eta]Total$, $[\eta]I$, $[\eta]II$) are measured and calculated in the following procedures.

The limiting viscosity number $[\eta]II$ of the polymer (II) is calculated from the following formula with the limiting viscosity number ($[\eta]I$) of the polymer (I) prepared in the upstream polymerization step, the limiting viscosity number ($[\eta]Total$) of the final polymer (i.e., a polymer material composed of the polymer (I) and the polymer (II)) after the downstream polymerization step measured by the method described above, and the content of the polymer (II) contained

in the final polymer.

$$[\eta]II = ([\eta]Total - [\eta]I \times XI)/XII$$

[η]Total: the limiting viscosity number of the final polymer (unit: dL/g)
[η]I: the limiting viscosity number of the polymer (I) (unit: dL/g)
XI: the mass ratio of the polymer (I) to the final polymer
XII: the mass ratio of the polymer (II) to the final polymer
XI and XII are obtained from the mass balance in the polymerization.

The mass ratio XII of the polymer (II) to the final polymer may be calculated from the following formula using the heat of crystal fusion of each of the polymer (I) and the final polymer.

$$XII = 1 - (\Delta Hf)T/(\Delta Hf)P$$

(ΔHf)T: the heat of fusion of the final polymer (the polymer (I) and the polymer (II)) (unit: cal/g)
(ΔHf)P: the heat of fusion of the polymer (I) (unit: cal/g)

The molecular weight distribution (Mw/Mn) of the polymer (I) measured by GPC is preferably 1 or more and less than 10, more preferably 2 to 7, still more preferably 3 to 5.

The olefin resin composition may contain an olefin copolymer including an ethylene unit and an α-olefin unit having 4 or more carbon atoms. Hereinafter, the olefin copolymer including an ethylene unit and an α-olefin unit having 4 or more carbon atoms is also referred to as an ethylene-α-olefin copolymer (4). The olefin resin composition may contain a single ethylene-α-olefin copolymer (4) or may contain two or more ethylene-α-olefin copolymers (4) in combination at any ratio.

The content of the ethylene-α-olefin copolymer (4) in the olefin resin composition is preferably 0 to 40 mass%, more preferably 0 to 30 mass% relative to 100 mass% of the olefin resin composition.

The total content of the ethylene unit and the α-olefin unit having 4 or more carbon atoms in the ethylene-α-olefin copolymer (4), relative to the total mass of the ethylene-α-olefin copolymer (4), is preferably 95 mass% or more, more preferably 98 mass% or more, still more preferably 99 mass% or more, and normally 100 mass% or less, and may be 100 mass%.

Examples of the α-olefin having 4 or more carbon atoms that may constitute the ethylene-α-olefin copolymer (4) include α-olefins having 4 to 12 carbon atoms (e.g., 1-butene, 1-pentene, 1-hexene, 4-methyl-1-pentene, 1-octene, and 1-decene). The α-olefin having 4 or more carbon atoms is preferably 1-butene, 1-hexene, or 1-octene. The α-olefin having 4 or more carbon atoms may be an α-olefin (e.g., vinylcyclopropane, vinylcyclobutane) having a cyclic structure and having 4 or more carbon atoms including the carbon atoms of the cyclic structure.

Examples of the ethylene-α-olefin copolymer (4) include ethylene-1-butene copolymer, ethylene-1-hexene copolymer, ethylene-1-octene copolymer, ethylene-1-decene copolymer, ethylene-(3-methyl-1-butene) copolymer, and a copolymer of ethylene and an α-olefin having a cyclic structure.

The content of the α-olefin unit having 4 or more carbon atoms in the ethylene-α-olefin copolymer (4), relative to the total mass of the ethylene-α-olefin copolymer (4), is preferably 1 to 80 mass%, more preferably 1 to 75 mass%, still more preferably 10 to 72 mass%.

The melt flow rate (MFR) of the ethylene-α-olefin copolymer (4) measured at 190°C under a load of 2.16 kgf in accordance with JIS K7210-1:2014 and K7210-2:2014 is preferably 0.1 g/10 min to 80 g/10 min, more preferably 0.2 to 40 g/10 min, still more preferably 0.2 to 35 g/10 min.

To improve the impact resistance of the molded body containing the olefin resin composition, the density of the ethylene-α-olefin copolymer (4) is preferably 0.850 to 0.930 g/$cm^3$, more preferably 0.850 to 0.900 g/$cm^3$.

The ethylene-α-olefin copolymer (4) can be produced by, for example, polymerizing ethylene and an α-olefin having 4 or more carbon atoms using a polymerization catalyst. Examples of the polymerization catalyst include the polymerization catalysts illustrated as the polymerization catalysts for producing the propylene-based polymer.

The ethylene-α-olefin copolymer (4) may be a commercial product. Examples of the commercial product include "ENGAGE (registered trademark)" available from Dow Chemical Japan Ltd.; "TAFMER (registered trademark)" available from Mitsui Chemicals, Inc.; "NEO-ZEX (registered trademark)" and "ULT-ZEX (registered trademark)" available from Prime Polymer Co., Ltd.; and "EXCELLEN FX (registered trademark)", "SUMIKATHENE (registered trademark)", and "ESPRENE SPO (registered trademark)" available from Sumitomo Chemical Co., Ltd.

[3. Inorganic Filler]

The olefin resin composition of this embodiment contains an inorganic filler. The olefin resin composition may contain a single inorganic filler or may contain two or more inorganic fillers in combination at any ratio.
Examples of the inorganic filler include glass, silicate minerals (e.g., talc), silicon dioxide (e.g., silica), titanium oxide, iron oxide, aluminum oxide (e.g., alumina), magnesium oxide, antimony oxide, barium ferrite, strontium ferrite, beryllium oxide, magnesium hydroxide, aluminum hydroxide, basic magnesium carbonate, calcium carbonate, magnesium carbonate, carbonate minerals, calcium sulfate, magnesium sulfate, basic magnesium sulfate, calcium sulfite, and cadmium sulfide.
The inorganic filler may have any shape and may be, for example, platy, needle-like, or fibrous. The inorganic filler may be treated with a surface treatment agent, such as a silane coupling agent, a titanium coupling agent, or a surfactant, or may not be treated with any surface treatment agent. The inorganic filler treated with such a surface treatment agent may have improved interfacial adhesion to the olefin polymer and may have improved dispersibility in the olefin resin composition.
To improve the rigidity, impact resistance, and dimensional stability of the molded body containing the olefin resin composition, the olefin resin composition preferably contains talc, which is a type of platy silicate mineral, as an inorganic filler.
The content of the inorganic filler in the olefin resin composition is preferably 0.01 to 50 mass%, more preferably 0.03 mass% to 45 mass% relative to the olefin resin composition.
When the olefin resin composition contains talc as an inorganic filler, the content of talc in the olefin resin composition, relative to the olefin resin composition, is preferably 0.01 to 50 mass%, more preferably 0.03 to 45 mass%, still more preferably 1 mass% to 40 mass%, particularly preferably 3 mass% to 30 mass%.

[4. Component (Z): Compounds Represented by Formula (1) and Basic Zinc Carbonate]

The olefin resin composition of this embodiment normally contains 0.001 to 3 mass% of the component (Z).
Note that the mass of the olefin resin composition is 100 mass%. Component (Z) is at least one selected from the group consisting of compounds represented by formula (1) and basic zinc carbonate. When the olefin resin composition of this embodiment contains 0.001 to 3 mass% of the component (Z), the olefin resin composition may have low fogging properties and may emit less odor when exposed to high temperatures.

(Compound Represented by Formula (1))

When the olefin resin composition contains the compound represented by formula (1) below, the olefin resin composition may contain only one compound represented by formula (1) or may contain two or more compounds represented by formula (1) in combination at any ratio.

$$M(OH)_q(R^1\text{-}CO_2)_r \qquad (1)$$

M represents a zinc atom or an aluminum atom.
q represents 0, 1, 2 or 3, r represents 0, 1, 2 or 3, and when M is a zinc atom, q + r is 2, or when M is an aluminum atom, q + r is 3.
When q is 0, $R^1$ represents a $C_{10}$-$C_{25}$ monovalent linear aliphatic hydrocarbon group substituted by a hydroxy group.
When q is 1, 2 or 3, $R^1$ represents a $C_{10}$-$C_{25}$ monovalent linear aliphatic hydrocarbon group optionally substituted by a hydroxy group.
In this description, the monovalent linear aliphatic hydrocarbon group optionally substituted by a hydroxy group includes (1) a monovalent linear aliphatic hydrocarbon group not substituted by a hydroxy group, and (2) a monovalent linear aliphatic hydrocarbon group in which a hydrogen atom is substituted by a hydroxy group. The monovalent linear aliphatic hydrocarbon group may be substituted by one hydroxy group or substituted by two or more hydroxy groups.
The monovalent linear aliphatic hydrocarbon group is preferably unsubstituted or substituted by one hydroxy group.
Examples of the $C_{10}$-$C_{25}$ monovalent linear aliphatic hydrocarbon group include $C_{10}$-$C_{25}$ linear alkyl groups, $C_{10}$-$C_{25}$ linear alkenyl groups, and $C_{10}$-$C_{25}$ linear alkynyl groups.
The $C_{10}$-$C_{25}$ monovalent linear aliphatic hydrocarbon group optionally substituted by a hydroxy group is preferably a $C_{10}$-$C_{25}$ linear alkyl group optionally substituted by a hydroxy group or a $C_{10}$-$C_{25}$ linear alkenyl group optionally substituted by a hydroxy group, more preferably a $C_{10}$-$C_{23}$ linear alkyl group optionally substituted by a hydroxy group or a $C_{10}$-$C_{23}$ linear alkenyl group optionally substituted by a hydroxy group, still more preferably a $C_{13}$-$C_{21}$ linear alkyl

group optionally substituted by a hydroxy group or a $C_{13}$-$C_{21}$ linear alkenyl group optionally substituted by a hydroxy group, particularly preferably a $C_{17}$ linear alkyl group optionally substituted by a hydroxy group or a $C_{17}$ linear alkenyl group optionally substituted by a hydroxy group.

Examples of the $C_{10}$-$C_{25}$ linear alkyl group include decyl group, undecyl group, dodecyl group, tridecyl group, tetradecyl group, pentadecyl group, hexadecyl group, heptadecyl group, octadecyl group, nonadecyl group, and icosyl group. The $C_{10}$-$C_{25}$ linear alkyl group is preferably pentadecyl group, heptadecyl group, or nonadecyl group.

Examples of the $C_{10}$-$C_{25}$ linear alkyl group substituted by a hydroxy group include 11-hydroxypentadecyl group, 11-hydroxyheptadecyl group, and 11-hydroxynonadecyl group. The $C_{10}$-$C_{25}$ linear alkyl group substituted by a hydroxy group is preferably 11-hydroxyheptadecyl group.

Examples of the $C_{10}$-$C_{25}$ linear alkenyl group include 8-pentadecenyl group, 8-heptadecenyl group, and 8-nonadecenyl group. The $C_{10}$-$C_{25}$ linear alkenyl group is preferably 8-heptadecenyl group.

Examples of the $C_{10}$-$C_{25}$ linear alkenyl group substituted by a hydroxy group include 11-hydroxy-8-pentadecenyl group, 11-hydroxy-8-heptadecenyl group, and 11-hydroxy-8-nonadecenyl group. The $C_{10}$-$C_{25}$ linear alkenyl group substituted by a hydroxy group is preferably 11-hydroxy-8-heptadecenyl group.

Examples of the compound represented by formula (1) include zinc bis(12-hydroxystearate), zinc bis(ricinoleate), aluminum 12-hydroxystearate, aluminum monostearate, and aluminum distearate.

Zinc bis(ricinoleate) is a compound represented by the following formula.

The content of zinc bis(ricinoleate) in the olefin resin composition is preferably 2 mass% or less, more preferably 1 mass% or less, still more preferably 0.5 mass% or less, and preferably 0.01 mass% or more.

[Chem. 1]

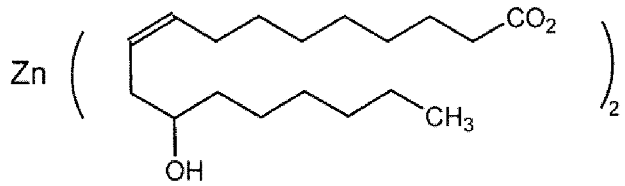

Aluminum 12-hydroxystearate is a compound represented by the following formula.

The content of aluminum 12-hydroxystearate in the olefin resin composition is preferably 2 mass% or less, more preferably 1 mass% or less, still more preferably 0.5 mass% or less, and preferably 0.01 mass% or more.

[Chem. 2]

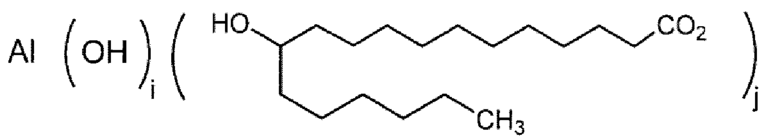

i+j=3

i≧0, j≦3

Aluminum monostearate is a compound represented by $Al(OH)_2(St)$.

In the formula, "St" represents stearoyloxy ($CH_3$-$(CH_2)_{16}$-$CO_2$).

The content of aluminum monostearate in the olefin resin composition is preferably 2 mass% or less, more preferably 1 mass% or less, still more preferably 0.5 mass% or less, and preferably 0.01 mass% or more.

Aluminum distearate is a compound represented by $Al(OH)\ (St)_2$. In the formula, "St" has the same definition as above.

The content of aluminum distearate in the olefin resin composition is preferably 0.01 mass% or more, and preferably 1 mass% or less, more preferably 0.7 mass% or less, still more preferably 0.5 mass% or less, and particularly preferably 0.3 mass% or less.

(Basic Zinc Carbonate)

Basic zinc carbonate is a compound represented by the following formula.

$$3Zn(OH)_2 \cdot 2ZnCO_3 \cdot H_2O$$

From a cost point of view, the content of basic zinc carbonate in the olefin resin composition is preferably 2 mass% or less, more preferably 1 mass% or less, still more preferably 0.5 mass% or less, and preferably 0.01 mass% or more.

[Content of Compounds Represented by Formula (1) and Basic Zinc Carbonate]

In the olefin resin composition, the content of the component (Z), that is, the total content of the compounds represented by formula (1) and basic zinc carbonate, is normally 0.001 to 3 mass%.
When the olefin resin composition contains only one substance selected from the group consisting of compounds represented by formula (1) and basic zinc carbonate, the total content of the compounds represented by formula (1) and basic zinc carbonate means the content of the only one substance.
In one embodiment, the olefin resin composition preferably contains 0.001 to 3 mass% of the compounds represented by formula (1) in total.
In another embodiment, the olefin resin composition preferably contains 0.001 to 3 mass% of basic zinc carbonate.

[5. Optional Components]

The olefin resin composition of this embodiment may contain optional components in addition to the olefin polymer, the inorganic filler, and the at least one selected from the group consisting of compounds represented by formula (1) and basic zinc carbonate. Examples of the optional components include modifiers, pigments (e.g., inorganic pigments, organic pigments), pigment dispersants, lubricants, neutralizers, antioxidants, weathering agents, UV absorbers, nucleating agents, antistatic agents, antiblocking agents, processing aids, organic peroxides, foaming agents, foam nucleating agents, plasticizers, flame retardants, cross-linking agents, cross-linking aids, brightening agents, anti-bacterial agents, adsorbents, deodorants, fluidity and impact resistance improvers using cross-linking, and light diffusers.
The olefin resin composition may contain only one optional component or may contain two or more optional components in combination at any ratio.
The olefin resin composition may contain zinc bis(stearate) as an optional component. The olefin resin composition may contain calcium hydroxide as an optional component. In consideration of the balance between less odor and low fogging properties, the olefin resin composition preferably contains basic zinc carbonate and zinc bis(stearate) when the olefin resin composition contains at least basic zinc carbonate among the component (Z). To prevent mold contamination and avoid poor appearance of the molded product surface caused by bleed whitening, the content of zinc bis(stearate) in the olefin resin composition is preferably 1 mass% or less, more preferably 0.7 mass% or less, still more preferably 0.5 mass% or less, particularly preferably 0.3 mass% or less. The olefin resin composition may or may not contain at least one of synthetic zeolites and natural zeolites as an optional component. From the viewpoint of cost reduction and hue stability, the olefin resin composition of this embodiment is preferably free of synthetic zeolites and natural zeolites when the olefin resin composition contains zinc bis(ricinoleate) as the component (Z).
The olefin resin composition may contain a pigment as an optional component. The pigment is preferably carbon black.
The olefin resin composition preferably contains 0.001 to 6 mass% of a pigment, more preferably contains 0.001 to 6 mass% of carbon black as a pigment, still more preferably contains 0.001 to 3 mass% of a pigment, yet still more preferably contains 0.001 to 3 mass% of carbon black as a pigment.

[6. Physical Properties of Olefin Resin Composition]

To improve the moldability of the olefin resin composition, the melt flow rate (MFR) of the olefin resin composition of this embodiment measured at 230°C under a load of 2.16 kgf in accordance with JIS K7210-1:2014 and K7210-2:2014 is preferably 1 g/10 or more. The melt flow rate (MFR) is more preferably 5 g/10 min or more, still more preferably 10 g/10 min or more, particularly preferably 15 g/10 min or more.

[7. Method for Producing Olefin Resin Composition]

The olefin resin composition of this embodiment may be produced by any method known in the art using the components described above.
The olefin resin composition of this embodiment may be produced by, for example, melt-kneading components to be contained in the olefin resin composition. The temperature of melt kneading can be, for example, 180°C or higher, and may be, for example, 180 to 300°C, or 180°C to 250°C.

Examples of devices for melt kneading include Banbury mixers, single-screw extruders, and twin-screw extruders (e.g., co-rotating twin-screw extruders).
The kneading order of the components to be contained in the olefin resin composition is not limited.
For example, the components other than the pigment may be kneaded to produce a kneaded material, and the kneaded material and the pigment may be then kneaded. The pigment may be in the form of a masterbatch containing a pigment and another component (e.g., an olefin polymer and a pigment dispersant).
The olefin resin composition may have any shape, such as a strand, a sheet, a plate, or pellets.
To improve moldability and production stability for producing a molded body from the olefin resin composition, the olefin resin composition is preferably in the form of pellets with a length of 1 to 50 mm.

[8. Applications of Olefin Resin Composition]

There is no limit to the application of the olefin resin composition of this embodiment. The olefin resin composition is suitably used in various applications that require high fogging properties and less odor.
The olefin resin composition of this embodiment is suitable used as, for example, a material of a molded body. Examples of the method for forming a molded body from the olefin resin composition include, but are not limited to, injection molding. Examples of injection molding include a typical injection molding method, an injection foam molding method, a supercritical injection foam molding method, an ultra-high speed injection molding method, an injection compression molding method, a gas-assisted injection molding method, a sandwich molding method, a sandwich foam molding method, and an insert-outsert molding method.
The olefin resin composition of this embodiment may be suitable used as an injection molding material.
A molded body produced by molding the olefin resin composition of this embodiment may be suitably used as, for example, parts for automobiles, parts for home appliances, and containers.
In particular, a molded body may be suitably used as an automotive interior part that requires high fogging properties and less odor. Examples of automotive interior parts include door trims, pillars, and instrument panels. The molded body may also be suitably used in material recycling applications. In other words, after crushing or pulverizing the molded body containing the olefin resin composition of this embodiment, only the pulverized material can be molded again. The pulverized material of the molded body containing the olefin resin composition of this embodiment can be mixed with another resin composition and/or a pulverized material of another molded body, and the resulting mixture can be molded again. In this mixing process, the component (Z) may or may not be added. A resin composition produced as a recycled material by adding the component (Z) to a pulverized material of a molded body containing an olefin polymer and an inorganic filler but containing no component (Z) can also be regarded as the olefin resin composition of this embodiment.
Examples of the method for producing the olefin resin composition in material recycling include the following method.
A method for producing the olefin resin composition including step (A) and step (B).
Step (A): a step of pulverizing a molded body containing the olefin resin composition of this embodiment to form a pulverized material,
**[0152]** Step (B): a step of melt-kneading the pulverized material to form the olefin resin composition.
In step (B), the pulverized material may be melt-kneaded with at least one selected from the group consisting of an olefin polymer, an inorganic filler, and the component (Z). The content of the component (Z) in the obtained olefin resin composition is adjusted to 0.001 to 3 mass% as appropriate.
Examples of the method for producing a molded body containing the olefin resin composition in material recycling include the following method.
A method for producing a molded body containing the olefin resin composition including step (A') and step (B').
Step (A'): a step of pulverizing a molded body containing the olefin resin composition of this embodiment to form a pulverized material,
**[0157]** Step (B'): a step of molding the pulverized material into a molded body containing the olefin resin composition.
In step (B'), the pulverized material may be mixed with at least one selected from the group consisting of an olefin polymer, an inorganic filler, and the component (Z) before molding. The content of the component (Z) in the obtained molded body is adjusted to 0.001 to 3 mass% as appropriate.

[9. Molded Body]

A molded body according to an embodiment of the present invention contains the olefin resin composition.
Examples of the method for producing the molded body include, but are not limited to, injection molding. Examples of injection molding include the same methods as above.
The molded body of this embodiment may have any dimensions and shape. For example, the molded body

may have dimensions and shapes suitable as parts illustrated as the automotive interior parts described above.

The molded body of this embodiment may contain optional components, such as a releasing agent, in addition to the olefin resin composition.

## EXAMPLES

The present invention will be described below in detail by way of Examples. The present invention is not limited to Examples described below.

In the following description, the units "%" and "part" indicating the amount are on a mass basis, unless otherwise specified. The operations described below were carried out under normal temperature and pressure conditions, unless otherwise specified.

[Method for Measuring Physical Properties]

(Melt Flow Rate)

The melt flow rate was measured at 230°C under a load of 2.16 kgf in accordance with JIS K7210-1:2014 and K7210-2:2014. Note that the melt flow rate of the component (B-1) was measured at 190°C under a load of 2.16 kgf.

(Limiting Viscosity Number)

The limiting viscosity number was determined by an "extrapolation method", in which the reduced viscosity was measured at different concentrations by using an Ubbelohde viscometer, and the reduced viscosity was plotted against concentration and extrapolated to zero. More specifically, the limiting viscosity number was determined by measuring the reduced viscosity at three concentrations, 0.1 g/dL, 0.2 g/dL, and 0.5 g/dL, plotting the reduced viscosity against concentration, and extrapolating the reduced viscosity to zero concentration in accordance with the method described in "Polymer Solution, Polymer Experiment 11" (published by Kyoritsu Shuppan Co., Ltd., 1982), page 491.

[Components Used in Examples and Comparative Examples]

The components used in Examples and Comparative Examples are described below.

(1) Polymer

(Propylene-Based Polymer (A-1): (Heterophasic Propylene Polymer Material)

A heterophasic propylene polymer material (A-1), which is a propylene-based polymer, containing 87 parts by mass of (a) a propylene homopolymer component, which is the polymer (I), and 13 parts by mass of (b) an ethylene-propylene random copolymer component, which is the polymer (II), was produced by a liquid phase-gas phase polymerization method using a polymerization catalyst obtained by the method described in Example 1 of JP-A-2004-182981. The physical properties were as described below.

- · Melt flow rate (230°C, load 2.16 kgf): 55 g/10 min
- · (a) Propylene homopolymer component Limiting viscosity number: 0.90 dL/g
- · (b) Ethylene-propylene random copolymer Limiting viscosity number: 6.0 dL/g

Content of constitutional unit derived from ethylene: 32 mass%

(Propylene-Based Polymer (A-2): Propylene Homopolymer)

A propylene homopolymer (A-2) was produced as a propylene-based polymer by a liquid phase-gas phase polymerization method using a polymerization catalyst obtained by the method described in Example 1 of JP-A-2004-182981. The physical properties were as described below.

- · Melt flow rate (230°C, load 2.16 kgf): 3.2 g/10 min
- · Limiting viscosity number: 2.0 dL/g

(Olefin-Based Polymer (B-1): Ethylene-α-Olefin Copolymer (4))

"ENGAGE (registered trademark) 7447" (ethylene-1-butene copolymer) available from Dow Chemical Japan Ltd. was used. The physical properties were as described below.

- · Content of constitutional unit derived from ethylene: 70 mass% (content of constitutional unit derived from 1-butene: 30 mass%)
- · Melt flow rate (190°C, load 2.16 kgf): 5 g/10 min
- · Density: 0.865 g/cm$^3$

(2) Metal-Based Additive

(Basic zinc carbonate (also known as zinc hydroxide carbonate or zinc carbonate hydroxide): CAS No. 5263-02-5 or CAS No. 12122-17-7)

Basic zinc carbonate available from Aldrich was used.

(Zinc bis(ricinoleate): CAS No. 13040-19-2)

Zinc bis(ricinoleate) "TEGO SORB" available from Evonik Industries was used.
(Zinc bis(12-hydroxystearate): CAS No. 35674-68-1) zinc bis(12-hydroxystearate) available from Nitto Chemical Industry Co., Ltd. was used.

(Zinc bis(stearate): CAS No. 557-05-1)

Zinc bis(stearate) (product name "Zn-ST", "zinc stearate") available from Nitto Chemical Industry Co., Ltd. was used.

(Calcium hydroxide: CAS No. 1305-62-0)

"Calcium hydroxide CLS-B" available from Shiraishi Calcium Kaisha, Ltd. was used.

(3) Inorganic Filler

(Talc: CAS No. 14807-96-6)

"MWUPN-TT-H" available from Hayashi Kasei Co., Ltd. was used.

(4) Pigment

The following masterbatches containing a pigment were used.

(Carbon black-containing masterbatch 1: hereinafter may be referred to as "CB-containing MB1")

"PP-RM 20T3316 202B" available from Dainichiseika Color & Chemicals Mfg. Co., Ltd. was used. The masterbatch contains 20 mass% of carbon black.

(Carbon black-containing masterbatch 2: hereinafter may be referred to as "CB-containing MB2")

"EX3620-30MB 201B" available from Nippon Pigment Company Limited was used. The masterbatch contains 50 mass% of carbon black.

(5) Lubricant

(Ethylene bis(stearamide): CAS No. 324-27431)

"ALFLOW H-50S" available from NOF Corporation was used.

(6) Neutralizer

(Calcium stearate: CAS No. 1592-23-0)

Calcium stearate available from Sakai Chemical Industry Co.,Ltd. was used.

(7) Antioxidant

The following antioxidants were used.

(Antioxidant 1: CAS No. 90498-90-1)

"Sumilizer GA 80" available from Sumitomo Chemical Co., Ltd.

(Antioxidant 2: CAS No. 26741-53-7)

"SONGNOX 6260" available from Songwon Industrial Co., Ltd.

(Antioxidant 3: CAS No. 16545-54-3)

"Sumilizer TPM" available from Sumitomo Chemical Co., Ltd.

(8) Other Additives

"Hindered amine weathering agent 1 (HALS1): CAS No. 16545-54-3 "ADEKASTAB LA-77" available from ADEKA Corporation

"Hindered amine weathering agent 2 (HALS2): CAS No. 152261-33-1)

"UVINUL 5050 H" available from BASF

(UV absorber: CAS No. 4221-80-1)

"Sumisorb 400" available from Sumika Chemtex Company, Limited.

[Evaluation]

(Method for Measuring Odor)

The resin compositions of Examples and Comparative Examples were supplied to an injection molding machine ("M70 Injection Molding Machine" available from MEIKI & Company., LTD) and molded into plates made of the resin compositions 60 mm long, 60 mm wide, and 2.0 mm thick under the following conditions: molten resin temperature 200°C, mold temperature 40°C, filling pressure 15 MPa, holding pressure 4.3 MPa, holding pressure time 40 seconds, total cycle time 60 seconds, and molded body ejection temperature 60°C or lower. The plates each were then cut into pieces with a size 60 mm long, 30 mm wide, and 2.0 mm thick.

The cut plate pieces (total 3 pieces) were placed in a 0.5 L odorless glass bottle, and the glass bottle was closed and heated in an oven at 80°C for 2 hours.

The glass bottle was then allowed to stand at 60°C for a while. Next, an odor testing was performed on the plates of the resin compositions in the glass bottles in accordance with the following method by three or more panelists.

The level of odor was rated by the panelists on the basis of the following criteria.

1 point: no odor
2 points: some odor, but not unpleasant
3 points: distinct odor, but not unpleasant yet
4 points: unpleasant odor
5 points: very unpleasant odor
6 points: intolerable odor

The scores given by all of the panelists were summed up, and the summed score was divided by the number of panelists to obtain the average score for odor. The low odor level of the resin compositions of Examples and Comparative Examples was evaluated on the basis of the average score. The smaller the average score for odor, the less odor. An average score of 3.0 points or less is accepted.

(Fogging Test)

The resin compositions of Examples and Comparative Examples were supplied to "SE130 Molding Machine" available from Sumitomo Heavy Industries, Ltd. and molded into plates 150 mm long, 90 mm wide, and 3.0 mm thick at a molding temperature of 220°C, a mold cooling temperature of 50°C, and a pressure of 50 MPa. The plates were then cut into pieces with a size 100 mm long, 25 mm wide, and 3.0 mm thick.

The cut plate pieces (total 2 pieces) were used as samples and subjected to a fogging test using a glass fogging accelerated testing machine (available from Suga Test Instruments Co., Ltd.). The test conditions were a set temperature of 100°C and a heating time of 20 hours. One hour after the end of heating, the haze of each glass plate in the testing machine was measured by using an integrating sphere-type spectral transmittance meter and defined as a post-testing haze H1 (%). The haze was measured at 4 or more positions in fogging areas of the glass plate. The haze of the glass plate measured in advance before testing was defined as a pre-testing haze H0 (%), and a haze difference between before and after testing was calculated in accordance with the following formula.

$$\text{Haze difference (\%)} = H1 - H0$$

The sum of haze differences was divided by the number of measurement positions to obtain the average haze difference ΔHAZE (%). The low fogging properties of the resin compositions of Examples and Comparative Examples were evaluated on the basis of the average haze difference ΔHAZE (%). The smaller ΔHAZE, the better the low fogging properties. An average haze difference ΔHAZE of 3.9% or less is accepted.

[Examples 1 to 7, and 9 to 11, Comparative Examples 1 to 3]

The components other than the carbon black-containing masterbatches 1 and 2 were weighed according to the formulations shown in Tables 1 to 4 and mixed uniformly. Next, the resulting mixture was fed into a twin-screw kneader (twin screw extruder) ("TEX44αII" available from The Japan Steel Works, Ltd.) through the raw material inlet on the most upstream side and melt-kneaded to obtain pellets (a1). The conditions of melt kneading were as follows: cylinder temperature 200°C, discharge rate 50 kg/h, screw rotation speed 200 rpm, and feed hopper oxygen level 2%. The feed hopper oxygen level was measured by inserting a sensor of a portable oxygen meter into a purge resin inlet of a feed hopper. An oxygen level of 2% was achieved by causing nitrogen gas to flow into the feed hopper.

Next, 100 parts by mass of the pellets (a1) were uniformly mixed with the carbon black-containing masterbatch 1 or 2 according to the formulations (parts by mass) shown in Tables 1 to 3 to produce resin compositions. The odor and ΔHAZE value of the obtained resin compositions were measured by the evaluation methods described above.

[Example 12, Comparative Example 4]

The components were weighed according to the formulations as shown in Table 4 and mixed uniformly. Next, the resulting mixture was fed into a twin-screw kneader (twin screw extruder) ("TEX44αII" available from The Japan Steel Works, Ltd.) through the raw material inlet on the most upstream side and melt-kneaded to obtain pellets (a1). The conditions of melt kneading were as follows: cylinder temperature 200°C, discharge rate 50 kg/h, screw rotation speed 200 rpm, and feed hopper oxygen level 2%. The feed hopper oxygen level was measured by inserting a sensor of a portable oxygen meter into a purge resin inlet of a feed hopper. An oxygen level of 2% was achieved by causing nitrogen gas to flow into the feed hopper. The odor and ΔHAZE value of the obtained pellets (a1) were measured by the evaluation method described above.

[Formulations and Evaluation Results of Resin Compositions]

The formulations and evaluation results of the resin compositions are shown in Tables 1 to 3 below.

The abbreviations in Tables below have the following meanings.

"Zn(Ric)2": Zinc bis(ricinoleate)
"Zn(12-OH-St)2": zinc bis(12-hydroxystearate)
"ZnSt2": zinc bis(stearate)
"A-1": propylene-based polymer (A-1) (heterophasic propylene polymer material), "A-2": propylene-based polymer (A-2) (propylene homopolymer)
"A-3": ethylene-1-hexene copolymer (A-3) ("SUMIKATHENE α GZ802" available from Sumitomo Chemical Co., Ltd., density: 0.927 g/cm3, MFR (190°C, load 2.16 kgf): 30 g/10 min)

"A-4": propylene-based polymer (A-4) (propylene homopolymer, "NOBLEN W101" available from Sumitomo Chemical Co., Ltd., MFR (230°C, load 2.16 kgf): 8.5 g/10 min, limiting viscosity number: 1.6 dL/g)
"B-1": olefin-based polymer (B-1) (ethylene-1-butene copolymer, "ENGAGE (registered trademark) 7447" available from Dow Chemical Japan Ltd.)
"Ca(OH)2": calcium hydroxide
"EBS": ethylene bis(stearamide)
"CaSt2": calcium stearate
"GA80": "Sumilizer GA 80" available from Sumitomo Chemical Co., Ltd.
"6260": "SONGNOX 6260" available from Songwon Industrial Co., Ltd.
"TPM": "Sumilizer TPM" available from Sumitomo Chemical Co., Ltd.
"LA77": "ADEKASTAB LA-77" available from ADEKA Corporation
"Uv5050H": "UVINUL 5050 H" available from BASF
"S400": "Sumisorb 400" available from Sumika Chemtex Company, Limited.
"ZS19": "ADEKASTAB ZS19" available from ADEKA Corporation
"CB-containing MB1": "PP-RM 20T3316 202B" available from Dainichiseika Color & Chemicals Mfg. Co., Ltd.
"CB-containing MB2": "EX3620-30MB 201B" available from Nippon Pigment Company Limited
"CB content": net carbon black content (parts by mass) in pigment masterbatch
"CB (%)": content (%) of carbon black in resin composition
"Component (Z) (%)": content (%) of component (Z) in resin composition

[Table 1]

Table 1

| | Example 1 | Example 2 | Example 3 | Example 4 | Example 5 |
|---|---|---|---|---|---|
| Component (Z) | | | | | |
| basic zinc carbonate (parts) | 0.5 | 0.5 | 0.5 | 0.1 | 0.3 |
| Zn(Ric)2 (parts) | 0 | 0 | 0 | 0 | 0 |
| Zn (12-OH-St) 2 (parts) | 0 | 0 | 0 | 0 | 0 |
| ZnSt2 (parts) | 0 | 0 | 0.5 | 0.1 | 0.5 |
| A-1 (parts) | 53.3 | 53.3 | 53.0 | 53.5 | 53.3 |
| A-2 (parts) | 7.4 | 7.4 | 7.4 | 7.4 | 7.4 |
| B-1 (parts) | 16.8 | 16.8 | 16.7 | 16.8 | 16.8 |
| Inorganic filler (Talc) (parts) | 21.2 | 21.2 | 21.1 | 21.3 | 21.3 |
| Ca(OH)2 (parts) | 0.4 | 0.4 | 0.4 | 0.4 | 0 |
| Lubricant (EBS) (parts) | 0.1 | 0.1 | 0.1 | 0.1 | 0.1 |
| Neutralizer (CaSt2) (parts) | 0.02 | 0.02 | 0.02 | 0.02 | 0.02 |
| Antioxidant 1 (GA80) (parts) | 0.02 | 0.02 | 0.02 | 0.02 | 0.02 |
| Antioxidant 2 (6260) (parts) | 0.1 | 0.1 | 0.1 | 0.1 | 0.1 |
| Antioxidant 3 (TPM) (parts) | 0.02 | 0.02 | 0.02 | 0.02 | 0.02 |
| HALS1 (LA77) (parts) | 0.1 | 0.1 | 0.1 | 0.1 | 0.1 |
| HALS2 (Uv5050H) (parts) | 0 | 0 | 0 | 0 | 0 |
| UV absorber (S400) (parts) | 0.04 | 0.04 | 0.04 | 0.04 | 0.04 |
| CB-containing MB1 (parts) | 0 | 3 | 3 | 3 | 3 |
| CB-containing MB2 (parts) | 3 | 0 | 0 | 0 | 0 |
| CB content (parts) | 1.5 | 0.6 | 0.6 | 0.6 | 0.6 |

(continued)

| | Example 1 | Example 2 | Example 3 | Example 4 | Example 5 |
|---|---|---|---|---|---|
| CB (%) | 1.5 | 0.6 | 0.6 | 0.6 | 0.6 |
| Component (Z) (%) | 0.48 | 0.48 | 0.48 | 0.10 | 0.29 |
| Odor (points) | 3.0 | 3.0 | 2.4 | 2.6 | 2.9 |
| ∆HAZE (%) | 3.0 | 0.6 | 3.0 | 2.7 | 2.4 |

[Table 2]

Table 2

| | Example 6 | Example 7 | Example 9 | Example 10 |
|---|---|---|---|---|
| Component (Z) | | | | |
| basic zinc carbonate (parts) | 0.1 | 0 | 0 | 0.3 |
| Zn(Ric)2 (parts) | 0 | 0.4 | 0 | 0 |
| Zn(12-OH-St)2 (parts) | 0 | 0 | 0.4 | 0 |
| ZnSt2 (parts) | 0.1 | 0 | 0 | 0 |
| A-1 (parts) | 53.5 | 53.3 | 53.3 | 53.6 |
| A-2 (parts) | 7.4 | 7.4 | 7.4 | 7.4 |
| B-1 (parts) | 16.8 | 16.8 | 16.8 | 16.9 |
| Inorganic filler (Talc) (parts) | 21.3 | 21.3 | 21.3 | 21.4 |
| Ca(OH)2 (parts) | 0.4 | 0.4 | 0.4 | 0 |
| Lubricant (EBS) (parts) | 0.1 | 0.1 | 0.1 | 0.1 |
| Neutralizer (CaSt2) (parts) | 0.02 | 0.02 | 0.02 | 0.02 |
| Antioxidant 1 (GA80) (parts) | 0.04 | 0.04 | 0.02 | 0.02 |
| Antioxidant 2 (6260) (parts) | 0.1 | 0.1 | 0.1 | 0.1 |
| Antioxidant 3 (TPM) (parts) | 0 | 0 | 0.02 | 0.02 |
| HALS1 (LA77) (parts) | 0 | 0 | 0.1 | 0.1 |
| HALS2 (Uv5050H) (parts) | 0.14 | 0.14 | 0 | 0 |
| UV absorber (S400) (parts) | 0.00 | 0.00 | 0.04 | 0.04 |
| CB-containing MB1 (parts) | 3 | 3 | 3 | 3 |
| CB-containing MB2 (parts) | 0 | 0 | 0 | 0 |
| CB content (parts) | 0.6 | 0.6 | 0.6 | 0.6 |
| CB (%) | 0.6 | 0.6 | 0.6 | 0.6 |
| Component (Z) (%) | 0.10 | 0.38 | 0.38 | 0.29 |
| Odor (points) | 2.8 | 2.6 | 2.5 | 2.5 |
| ∆HAZE (%) | 1.4 | 0.7 | 3.8 | 1.5 |

[Table 3]

| | Comparative Example 1 | Comparative Example 2 |
|---|---|---|
| Component (Z) | | |
| basic zinc carbonate (parts) | 0 | 0 |
| Zn(Ric)2 (parts) | 0 | 0 |
| Zn(12-OH-St)2 (parts) | 0 | 0 |
| ZnSt2 (parts) | 0 | 0 |
| A-1 (parts) | 53.6 | 53.6 |
| A-2 (parts) | 7.4 | 7.4 |
| B-1 (parts) | 16.9 | 16.9 |
| Inorganic filler (Talc) (parts) | 21.3 | 21.3 |
| Ca(OH)2 (parts) | 0.4 | 0.4 |
| Lubricant (EBS) (parts) | 0.1 | 0.1 |
| Neutralizer (CaSt2) (parts) | 0.02 | 0.02 |
| Antioxidant 1 (GA80) (parts) | 0.02 | 0.02 |
| Antioxidant 2 (6260) (parts) | 0.1 | 0.1 |
| Antioxidant 3 (TPM) (parts) | 0.02 | 0.02 |
| HALS1 (LA77) (parts) | 0.1 | 0.1 |
| HALS2 (Uv5050H) (parts) | 0 | 0 |
| UV absorber (S400) (parts) | 0.04 | 0.04 |
| CB-containing MB1 (parts) | 0 | 3 |
| CB-containing MB2 (parts) | 3 | 0 |
| CB content (parts) | 1.5 | 0.6 |
| CB (%) | 1.5 | 0.6 |
| Component (Z) (%) | 0 | 0 |
| Odor (points) | 3.1 | 3.8 |
| ΔHAZE (%) | 4.0 | 1.2 |

[Table 4]

Table 4

| | Example 11 | Comparative Example 3 | Example 12 | Comparative Example 4 |
|---|---|---|---|---|
| Component (Z) | | | | |
| Basic zinc carbonate (parts) | 0.1 | 0 | 0.2 | 0 |
| Zn(Ric)2 (parts) | 0 | 0 | 0 | 0 |
| Zn(12-OH-St)2 (parts) | 0 | 0 | 0 | 0 |
| ZnSt2 (parts) | 0 | 0 | 1.0 | 0 |
| A-3 (parts) | 77.9 | 77.9 | 0 | 0 |
| A-4 (parts) | 0 | 0 | 58.9 | 59.6 |
| Inorganic filler (Talc) (parts) | 21.3 | 21.3 | 39.3 | 39.8 |

(continued)

| | Example 11 | Comparative Example 3 | Example 12 | Comparative Example 4 |
|---|---|---|---|---|
| Component (Z) | | | | |
| Ca(OH)2 (parts) | 0.4 | 0.4 | 0.0 | 0.0 |
| Lubricant (EBS) (parts) | 0.1 | 0.1 | 0.1 | 0.1 |
| Neutralizer (CaSt2) (parts) | 0.02 | 0.02 | 0.20 | 0.20 |
| Antioxidant 1 (GA80) (parts) | 0.02 | 0.02 | 0.08 | 0.08 |
| Antioxidant 2 (6260) (parts) | 0.1 | 0.1 | 0.1 | 0.1 |
| Antioxidant 3 (TPM) (parts) | 0.02 | 0.02 | 0.17 | 0.17 |
| HALS1 (LA77) (parts) | 0.1 | 0.1 | 0 | 0 |
| Copper inhibitor (ZS19) (parts) | 0 | 0 | 0.1 | 0.1 |
| UV absorber (S400) (parts) | 0.04 | 0.04 | 0 | 0 |
| CB-containing MB1 (parts) | 3 | 3 | 0 | 0 |
| CB-containing MB2 (parts) | 0 | 0 | 0 | 0 |
| CB content (parts) | 0.6 | 0.6 | 0 | 0 |
| CB (%) | 0.6 | 0.6 | 0 | 0 |
| Component (Z) (%) | 0.1 | 0 | 0.2 | 0 |
| Odor (points) | 3.0 | 4.3 | 2.6 | 4.1 |
| ∆HAZE (%) | 0.1 | 0.3 | 3.3 | 4.9 |

Referring to the results described above, the olefin resin compositions according to Comparative Examples 1 to 4 containing no component (Z) were rated poor in the evaluation of any one of odor and ∆HAZE.

The olefin resin compositions according to Examples 1 to 7 and 9 to 12 were rated good in the evaluation of both odor and ∆HAZE.

## Claims

**1.** An olefin resin composition comprising:

an olefin polymer;
an inorganic filler; and
0.001 to 3 mass% of at least one selected from the group consisting of compounds represented by formula (1) and basic zinc carbonate:

$$M(OH)_q(R^1\text{-}CO_2)_r \qquad (1)$$

(in formula (1),

M represents a zinc atom or an aluminum atom;
q represents 0, 1, 2 or 3; r represents 0, 1, 2 or 3; when M is a zinc atom, q + r is 2, or when M is an aluminum atom, q + r is 3;
when q is 0, $R^1$ represents a $C_{10}$-$C_{25}$ monovalent linear aliphatic hydrocarbon group substituted by a hydroxy group; and
when q is 1, 2 or 3, $R^1$ represents a $C_{10}$-$C_{25}$ monovalent linear aliphatic hydrocarbon group optionally substituted by a hydroxy group).

**2.** The olefin resin composition according to claim 1, wherein the olefin polymer is a propylene-based polymer.

3. The olefin resin composition according to claim 1, wherein the olefin polymer is an ethylene-based polymer.

4. The olefin resin composition according to any one of claims 1 to 3, wherein the inorganic filler contains talc.

5. The olefin resin composition according to any one of claims 1 to 4, further comprising 0.001 to 3 mass% of a pigment relative to the olefin resin composition.

6. The olefin resin composition according to claim 5, wherein the pigment contains carbon black.

7. The olefin resin composition according to any one of claims 1 to 6, wherein in the compounds represented by formula (1), M is a zinc atom, q is 0, and $R^1$ is a $C_{10}$-$C_{25}$ linear alkenyl group substituted by a hydroxy group.

8. The olefin resin composition according to any one of claims 1 to 7, wherein the olefin resin composition contains basic zinc carbonate.

9. The olefin resin composition according to any one of claims 1 to 8, further comprising zinc bis(stearate).

10. A molded body comprising the olefin resin composition according to any one of claims 1 to 9.

11. A method for producing the molded body according to claim 10, the method comprising step (A') and step (B'):

Step (A'): a step of pulverizing a molded body containing the olefin resin composition according to any one of claims 1 to 9 to form a pulverized material,
Step (B'): a step of molding the pulverized material into a molded body containing the olefin resin composition according to any one of claims 1 to 9.

## INTERNATIONAL SEARCH REPORT

International application No. **PCT/JP2022/000344**

**A. CLASSIFICATION OF SUBJECT MATTER**

***C08L 23/00***(2006.01)i; ***C08K 3/013***(2018.01)i; ***C08K 3/04***(2006.01)i; ***C08K 3/26***(2006.01)i; ***C08K 3/34***(2006.01)i; ***C08K 5/098***(2006.01)i; ***C08L 23/10***(2006.01)i

FI: C08L23/00; C08K3/013; C08K3/04; C08K3/26; C08K3/34; C08K5/098; C08L23/10

According to International Patent Classification (IPC) or to both national classification and IPC

**B. FIELDS SEARCHED**

Minimum documentation searched (classification system followed by classification symbols)

C08L23/00; C08K3/013; C08K3/04; C08K3/26; C08K3/34; C08K5/098; C08L23/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2012-229325 A (SEKISUI TECHNO SEIKEI KK) 22 November 2012 (2012-11-22) claims, paragraphs [0008]-[0039], examples | 1-4, 7,10<br>5-6, 9, 11 |
| X<br>Y | JP 2020-122102 A (SHIRAISHI CALCIUM KAISHA LTD.) 13 August 2020 (2020-08-13) claims, examples | 1-2, 4, 10<br>5-6, 9, 11 |
| X<br>Y | JP 2002-60558 A (NITTO KASEI KOGYO KK) 26 February 2002 (2002-02-26) claims, paragraphs [0007], [0010], [0014], examples | 1-3, 7, 10<br>5-6, 9, 11 |
| X<br>Y | JP 2-255844 A (DAINIPPON INK & CHEMICALS INC.) 16 October 1990 (1990-10-16) claims, page 3, lower right column to page 4, upper left column, examples | 1-3, 8, 10<br>5-6, 9, 11 |
| Y | WO 2012/133789 A1 (UBE INDUSTRIES, LTD.) 04 October 2012 (2012-10-04) claims, paragraphs [0016], [0018] | 5-6, 11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 January 2022** | **15 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2022/000344**

**C. DOCUMENTS CONSIDERED TO BE RELEVANT**

| Category* | Citation of document, with indication, where appropriate, of the relevant passages | Relevant to claim No. |
|---|---|---|
| Y | JP 2010-535892 A (EXXONMOBILE CHEMICAL PATENTS INC.) 25 November 2010 (2010-11-25) paragraph [0082] | 9 |

Form PCT/ISA/210 (second sheet) (January 2015)

**INTERNATIONAL SEARCH REPORT**
**Information on patent family members**

International application No.
**PCT/JP2022/000344**

| Patent document cited in search report | Publication date (day/month/year) | Patent family member(s) | Publication date (day/month/year) |
|---|---|---|---|
| JP 2012-229325 A | 22 November 2012 | (Family: none) | |
| JP 2020-122102 A | 13 August 2020 | US 2020/0247984 A1<br>claims, examples<br>CN 111499967 A | |
| JP 2002-60558 A | 26 February 2002 | (Family: none) | |
| JP 2-255844 A | 16 October 1990 | (Family: none) | |
| WO 2012/133789 A1 | 04 October 2012 | EP 2692793 A1<br>claims, paragraphs [0015], [0017]<br>CN 103562299 A | |
| JP 2010-535892 A | 25 November 2010 | WO 2009/020706 A1<br>paragraph [0082]<br>US 2009/0043049 A1<br>EP 2178968 A1<br>CN 101778899 A<br>KR 10-2010-0038221 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013100444 A
- JP 61218606 A
- JP 5194685 A
- JP 7216017 A
- JP 9316147 A
- JP 10212319 A
- JP 2004182981 A
- JP 55075410 A
- JP 2565753 B


### Non-patent literature cited in the description


- Polymer Solution, Polymer Experiment 11. Kyoritsu Shuppan Co., Ltd, 1982, 491
- *CHEMICAL ABSTRACTS,* 35674-68-1
- *CHEMICAL ABSTRACTS,* 16545-54-3
- *CHEMICAL ABSTRACTS,* 152261-33-1
- *CHEMICAL ABSTRACTS,* 4221-80-1